# EUROPEAN PATENT SPECIFICATION

(11) **EP 4 107 634 B1**
(45) Date of publication and mention of the grant of the patent: **26.03.2025**
(21) Application number: 20707039.2
(22) Date of filing: 20.02.2020
(51) Int. Cl.: G06F 16/906

(54) **DOWNLOAD OF VERIFIED VEHICLE MANOEUVRES**
HERUNTERLADEN VON VERIFIZIERTEN FAHRZEUGMANÖVERN
TÉLÉCHARGEMENT DE MANOEUVRES DE VÉHICULE VÉRIFIÉES

(43) Date of publication of application: 28.12.2022
(73) Proprietor: VOLVO TRUCK CORPORATION, 405 08 Göteborg (SE)
(72) Inventor: PERSSON, Daniel, 413 21 Göteborg (SE)
(74) Representative: Kransell & Wennborg KB
(86) International application number: PCT/EP2020/054475
(87) International publication number: WO 2021/164875

(56) References cited:
- WO-A1-2019/171292
- ASSIA BELBACHIR ET AL: "Simulation-Driven Validation of Advanced Driving-Assistance Systems", PROCEDIA - SOCIAL AND BEHAVIORAL SCIENCES, vol. 48, 2012, pages 1205 - 1214, XP055723456, ISSN: 1877-0428, DOI: 10.1016/j.sbspro.2012.06.1096

## Description

### TECHNICAL FIELD

Embodiments presented herein relate to a method, a server, a computer program, and a computer program product for enabling download of verified vehicle manoeuvres.

### BACKGROUND

Difficult vehicle manoeuvres are associated with risk, both for vulnerable road users, vehicles, and cargo. Such manoeuvres can also be bottlenecks at terminals and hinder efficiency, and further be difficult even for experienced drivers. Vehicles are typically multi-articulation angle combinations, which further increase manoeuvre difficulty. In recent years vehicle manufacturers have therefore invested resources in researching advanced motor vehicle driving assistance/aid systems, such as Advanced Driver Assistance Systems (ADAS), to improve driving safety and comfort. For this reason and due to the fact that they will help achieve the goals set by the European Union for reducing road accidents, ADAS are one of the fastest growing segments in the automotive sector.

ADAS safety features are designed to avoid collisions and accidents by offering technologies that warn drivers of potential problems, or to avoid collisions by implementing safeguard measures and taking control of the motor vehicles. Adaptive features can automate lighting, provide adaptive cruise control, automate braking, incorporate GPS/traffic signalling, connect smartphones, alert drivers of other motor vehicles of hazards, keep drivers in the right lane, or show what is in blind spots. ADAS technology is based on vision/camera systems, sensory systems, automotive data networks, vehicle-to-vehicle (V2V) or vehicle-to-infrastructure (V2I) communication systems. Next- generation ADAS systems will increasingly take advantage of wireless connectivity to offer added value to V2V or V2I communication.

US9978284B2 discloses methods for generating and sharing maneuver plans between vehicles. A maneuvering platform is defined which comprises a maneuver generation module. The maneuver generation module may be considered as a vehicle maneuver generation mechanism where vehicle maneuvers are generated for a route at a location. For instance, a maneuvering platform is disclosed to be arranged to calculate one or more vehicle maneuvers. The maneuver platform is also configured to interface with a group of vehicles to disseminate vehicle maneuvers. Drivers might thereby access generated vehicle maneuvers.

WO2019171292A1 discloses a method and system for a driver of a vehicle to record and save complex (and possibly hazardous) low speed vehicle manoeuvres. The low speed vehicle manoeuvres may be saved in a database and may be used by an autonomous driving system to perform the low speed vehicle manoeuvres at a later time. In addition, it is disclosed that the low speed vehicle manoeuvres may be shared with other drivers such as relatives. The benefit is to assist less experienced drivers to reduce the time needed and mistakes made when performing low speed vehicle manoeuvres in areas such as a hub complex for freight loading/unloading.

However, there is a need for improving the security when generating and sharing manoeuvre plans between vehicles, especially in terms of vehicle manoeuvres.

### SUMMARY

An object of embodiments herein is to alleviate security issues arising when handling downloadable vehicle manoeuvres.

According to a first aspect there is presented a method for enabling download of verified vehicle manoeuvres. The method comprises recording, in a database, a manoeuvre as having been performed by a first vehicle at a location and according to a set of conditions of the first vehicle and a set of conditions of the location. The method comprises assigning an assessment score to the manoeuvre upon the manoeuvre having been tested for at least one second vehicle. The manoeuvre is tested under test conditions given by the location, the set of conditions of the first vehicle and the set of conditions of the location. The method comprises determining the manoeuvre to be verified only when the assessment score is above a threshold value. The method comprises enabling download of the manoeuvre from the database to at least one third vehicle only in case the manoeuvre is verified.

According to a second aspect there is presented a server for enabling download of verified vehicle manoeuvres. The server comprises processing circuitry. The processing circuitry is configured to cause the server to record, in a database, a manoeuvre as having been performed by a first vehicle at a location and according to a set of conditions of the first vehicle and a set of conditions of the location. The processing circuitry is configured to cause the server to assign an assessment score to the manoeuvre upon the manoeuvre having been tested for at least one second vehicle. The manoeuvre is tested under test conditions given by the location, the set of conditions of the first vehicle and the set of conditions of the location. The processing circuitry is configured to cause the server to determine the manoeuvre to be verified only when the assessment score is above a threshold value. The processing circuitry is configured to cause the server to enable download of the manoeuvre from the database to at least one third vehicle only in case the manoeuvre is verified.

According to a third aspect there is presented server for enabling download of verified vehicle manoeuvres. The server comprises a record module configured to record, in a database, a manoeuvre as having been performed by a first vehicle at a location and according to a set of conditions of the first vehicle and a set of conditions of the location. The server comprises an assign module configured to assign an assessment score to the manoeuvre upon the manoeuvre having been tested for at least one second vehicle. The manoeuvre is tested under test conditions given by the location, the set of conditions of the first vehicle and the set of conditions of the location. The server comprises a determine module configured to determine the manoeuvre to be verified only when the assessment score is above a threshold value. The server comprises an enable download module configured to enable download of the manoeuvre from the database to at least one third vehicle only in case the manoeuvre is verified.

According to a fourth aspect there is presented a computer program for enabling download of verified vehicle manoeuvres, the computer program comprising computer program code which, when run on a server, causes the server to perform a method according to the first aspect.

According to a fifth aspect there is presented a computer program product comprising a computer program according to the fourth aspect and a computer readable storage medium on which the computer program is stored. The computer readable storage medium could be a non-transitory computer readable storage medium.

Advantageously these aspects improve the security with respect to which vehicle manoeuvres are available for download.

Advantageously these aspects prevent the download of potentially hazardous vehicle manoeuvres.

Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, module, step, etc." are to be interpreted openly as referring to at least one instance of the element, apparatus, component, means, module, step, etc., unless explicitly stated otherwise. The steps of any method disclosed herein do not have to be performed in the exact order disclosed, unless explicitly stated.

### BRIEF DESCRIPTION OF THE DRAWINGS

The inventive concept is now described, by way of example, with reference to the accompanying drawings, in which:
Fig. 1 is a schematic diagram of a scenario according to embodiments;
Fig. 2 is a flowchart of methods according to embodiments;
Fig. 3 is a schematic diagram showing functional units of a server according to an embodiment;
Fig. 4 is a schematic diagram showing functional modules of a server according to an embodiment; and
Fig. 5 shows one example of a computer program product comprising computer readable storage medium according to an embodiment

### DETAILED DESCRIPTION OF EXAMPLE EMBODIMENTS OF THE INVENTION

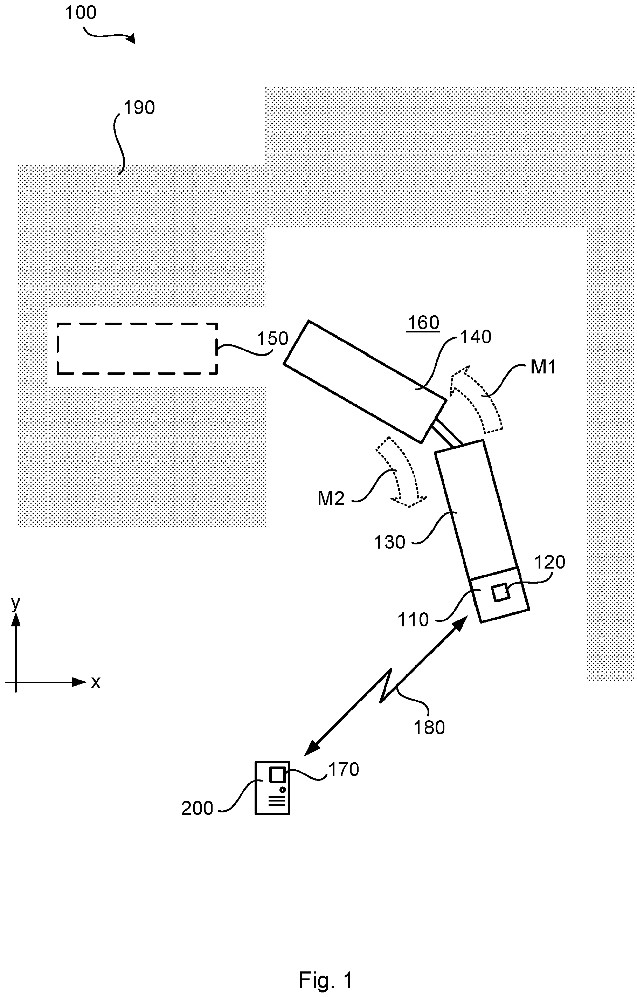

**Fig. 1** is a schematic diagram illustrating a simplified aerial viewpoint 100 of a scenario where the herein disclosed embodiments apply. Fig. 1 illustrates a scenario where a vehicle 110 (such as a cab) is connected to a truck 130 and a trailer 140. The vehicle 110, the truck 130 and the trailer 140 collectively form a carriage, or equipage. The carriage, or equipage, is placed at a location 160. The carriage, or equipage, will hereinafter for simplicity be referred to as a vehicle 110. The trailer 140 is to be manoeuvred to an intended goal position 150. The intended goal position 150 might represent a terminal docking place. The intended goal position 150 is surrounded by one or more physical obstacles 190, such as a building, which could make it difficult for the driver of the vehicle to correctly manoeuvre the trailer 140 to the intended goal position 150. In order for the truck 150 to be correctly positioned at the intended goal position 150, a series of manoeuvres, as schematically indicated by M1 and M2, needs to be performed at the location 160. The manoeuvres might be aided by ADAS, as provided in terms of an ADAS module 120 in the vehicle. The vehicle might be configured to establish a communication link 180 to a database 170, as provided in a server 200, for download of one or more manoeuvres to the vehicle. Likewise, upon having performed one or more manoeuvres, this one or more manoeuvres might be uploaded to the database 170 for use by another vehicle when present at the same location 160. As mentioned above, there is a need for improving the security when generating and sharing manoeuvre plans between vehicles, especially in terms of vehicle manoeuvres.

In this respect, none of the aforementioned documents US9978284B2 or WO2019171292A1 describe any kind of certification, but are more or less based on blind trust when another driver downloads the vehicle manoeuvres to his/her vehicle. This could result in a hazardous vehicle manoeuvre being downloaded and executed.

The embodiments disclosed herein relate to mechanisms for enabling download only of verified vehicle manoeuvres M1, M2. In order to obtain such mechanisms there is provided a server 200, a method performed by the server 200, a computer program product comprising code, for example in the form of a computer program, that when run on a server 200, causes the server 200 to perform the method.

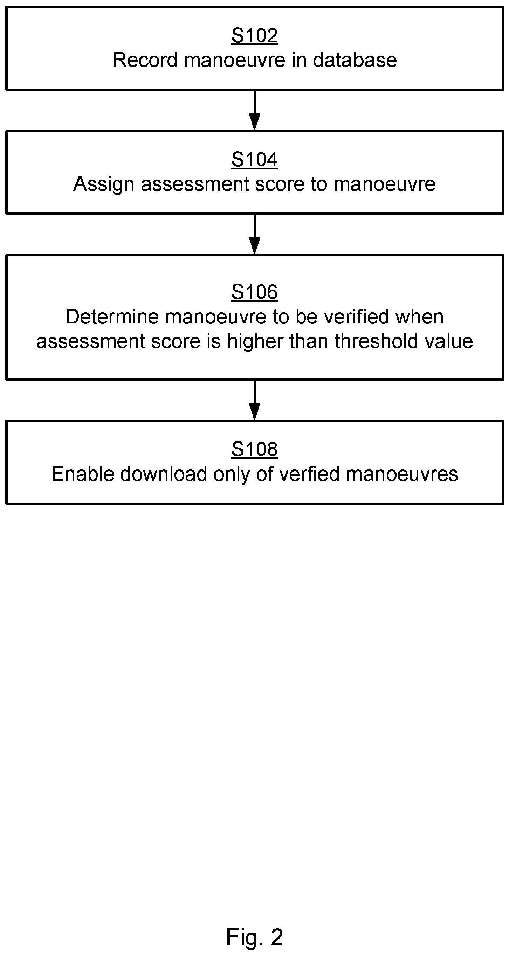

Fig. 2 is a flowchart illustrating embodiments of methods for enabling download of verified vehicle manoeuvres M1, M2. The methods are performed by the server 200. The methods are advantageously provided as computer programs 520.

S102: A manoeuvre M1, M2 as having been performed by a first vehicle 110 at a location 160 and according to a set of conditions of the first vehicle 110 and a set of conditions of the location 160 is recorded in a database 170.

S104: An assessment score is assigned to the manoeuvre M1, M2 upon the manoeuvre M1, M2 having been tested for at least one second vehicle. The manoeuvre M1, M2 is tested under test conditions given by the location 160, the set of conditions of the first vehicle 110 and the set of conditions of the location 160.

S106: The manoeuvre M1, M2 is determined to be verified only when the assessment score is above a threshold value. In this respect, that the manoeuvre M1, M2 is verified is to be interpreted as the manoeuvre M1, M2 being ready to be used i.e., that the manoeuvre M1, M2 is successfully verified.

S108: Download of the manoeuvre M1, M2 from the database 170 to at least one third vehicle is enabled only in case the manoeuvre M1, M2 is verified.

This provides a manoeuvre upload-verification-certification-download service.

Embodiments relating to further details of enabling download of verified vehicle manoeuvres M1, M2 as performed by the server 200 will now be disclosed.

In some aspects, the manoeuvre M1, M2 is performed upon the at least one third vehicle and/or the at least one second vehicle having requested the first vehicle 110 to perform the manoeuvre M1, M2 at the location 160. This could, for example, be the case where the driver of the first vehicle 110 is an experienced driver and/or where the driver of the at least one third vehicle is a less experienced driver. Thus, performing the manoeuvre M1, M2 might be initiated by the first vehicle 110 itself (or its driver) or by any of the at least one third vehicle and/or the at least one second vehicle (or their drivers).

There could be different ways to represent the manoeuvre M1, M2, for example when being recorded in the database 170, when being tested for the at least one second vehicle, and when being enabled for download to the at least one third vehicle. In some embodiments, the manoeuvre M1, M2 is represented by a track consisting of point positions associated with actions taken by the first vehicle 110 when located at the point positions. In other embodiments the manoeuvre M1, M2 is represented by a track of points where the ADAS is configured to keep the vehicle 110 on the track.

There could be different types of manoeuvres M1, M2. In some embodiments, the manoeuvre M1, M2 is an ADAS manoeuvre. In this respect, for an ADAS manoeuvre the driver controls gear, gas, and brake, and gets assistance, for example from the ADAS module 120, to follow the road. Alternatively or additionally, the manoeuvre M1, M2 might be AD reversing.

In order to notify the third vehicle, or its driver, of existence of the manoeuvre M1, M2 so that the manoeuvre M1, M2 can be downloaded to the third vehicle, map information or the like might be provided with an indicator of manoeuvre support being available at the location 160. In some embodiments, the manoeuvre M1, M2 as recorded in the database 170 is therefore accompanied by an indication of manoeuvre support at the location 160.

There may be different ways for the manoeuvre M1, M2 to be tested.

According to a first aspect, the manoeuvre M1, M2 is tested by being performed by a second vehicle that is controlled by a human driver. The manoeuvre M1, M2 should then be tested in an environment in accordance with the location 160, the set of conditions of the first vehicle 110 and the set of conditions of the location 160. For example, the manoeuvre M1, M2 might be tested by being performed by the at least one second vehicle at the same location 160 as the manoeuvre M1, M2 was performed by the first vehicle 110. The manoeuvre M1, M2 might even be tested for a plurality of second vehicles. Further, the manoeuvre M1, M2 might be iteratively tested for the at least one second vehicle and one individual assessment score is assigned per iteration, until the assessment score is above the threshold value. A first embodiment relating to this first aspect will be further disclosed below.

According to a second aspects, the manoeuvre M1, M2 is tested in a simulation environment. In particular, according to an embodiment, the manoeuvre M1, M2 is tested in a simulation environment that is built up in accordance with the location 160, the set of conditions of the first vehicle 110 and the set of conditions of the location 160. For example, the manoeuvre M1, M2 might be automatically tested in the simulation environment by being computer simulated in the simulation environment. The simulation environment might thus simulate the operation of, and the manoeuvres performed by, the above mentioned at least one second vehicle. A second embodiment relating to this second aspect will be further disclosed below.

Further aspects that apply regardless if the manoeuvre M1, M2 is tested in accordance with the first aspect or the second aspect will now be disclosed.

In some aspects, one and the same manoeuvre M1, M2 might not be suitable for all types of vehicles. For example, there might be operational differences, such as differences in manoeuvrability (such as steering, etc.), ADAS capabilities, sensors, and/or differences in physical dimensions (such as length, width, height, etc.; if the first vehicle was a short semi-trailer, it is not sure that a larger semi-trailer or a vehicle with more joints, has the possibility to use, or even perform, the same manoeuvre M1, M2) between different types of vehicles that makes one and the same manoeuvre M1, M2 suitable for a first vehicle type but unsuitable for a second vehicle type. For example, if the first vehicle is equipped with sensors that are lacking in the second vehicle then it might be verified that the manoeuvre M1, M2 can still be performed safely for the second vehicle even if lacking such sensors. In this respect, the manoeuvre M1, M2 might be restricted to certain vehicle types, etc. Thus, in some embodiments, the manoeuvre M1, M2 is associated with restrictions to certain vehicle types and/or sensor equipment and is only enabled to be downloaded to the at least one third vehicle if being one of these certain vehicle types and/or having such sensor equipment.

Further, the manoeuvre M1, M2 might be edited in order to fit more than one vehicle type. Thus, in some embodiments, the manoeuvre M1, M2 is edited to fit another vehicle type and/or sensor equipment than that of the first vehicle 110. According to the invention, the manoeuvre M1, M2 is edited in order to be tested for the second vehicle. That is, the manoeuvre M1, M2 is edited when tested for the at least one second vehicle. For example, the manoeuvre M1, M2 might be edited for different types of vehicles for example by changing curvatures of the manoeuvre M1, M2 depending on vehicle lengths.

Yet further, the manoeuvre M1, M2 might be edited to fit another location than the one where the manoeuvre M1, M2 was originally performed. For example, with access to a detailed map of the location 160, the the manoeuvre M1, M2 can be evaluated at another physical location. This might require additional testing of the the manoeuvre M1, M2. One and the same manoeuvre M1, M2 might thus be used at one or more additional locations that are similar to, or have corresponding properties (such as an identical loading bay but at another physical location) as, the location 160 for which the manoeuvre M1, M2 was recorded.

According to the invention, aspects relating to safety concepts, such as human errors, hardware failures, operational/environmental stress which could occur whilst the manoeuvre M1, M2 is performed by the third vehicle are also taken into consideration when testing the manoeuvre M1, M2 for the second vehicle such that such effects do not impact the safety of the manoeuvre M1, M2 as performed by the third vehicle.

According to the invention, a report is issued in response to the manoeuvre M1, M2 having been tested. This report might then be reviewed by stakeholders (either manually by one or more human operators, or automatically by being analyzed by a controller) and the assessment score is based on the outcome of the review. That is, in some embodiments, the assessment score is assigned upon review of a report issued in response to the manoeuvre M1, M2 having been tested for the at least one second vehicle.

It could be that two or more different manoeuvres M1, M2 are recorded for the same location 160. In some aspects, a recommendation as to which of these manoeuvres M1, M2 to download is then provided. That is, in some embodiments, at least two manoeuvres M1, M2 are recorded for the same location 160, where each of the at least two manoeuvres M1, M2 is assigned its own assessment score upon having been tested for the at least one second vehicle, and where an indication of recommendation is provided for that manoeuvre M1, M2 having the highest assessment score for the location 160. For example, each manoeuvre M1, M2 might be tested by drivers that vote for the manoeuvre M1, M2 they like best and submit the voting result to the server 200. The server 200 might thus collect votes as well as other metrics relating to each manoeuvre M1, M2, such as the number of turns and drive/reverse gear switches of each manoeuvre M1, M2, data for different vehicles following each manoeuvre M1, M2, etc. to make decisions on which manoeuvre M1, M2 or maneuvers M1, M2 to recommend to which type of vehicles. For example, a manoeuvre M1, M2 using as small curvature as possible might be preferred if the third vehicle is comparatively short whereas a manoeuvre M1, M2 using as large curvature as possible might be preferred if the third vehicle is comparatively long.

Details of the above mentioned first embodiment for the manoeuvre M1, M2 to be tested will be disclosed next.

It is assumed that a manoeuvre M1, M2 is performed by a first vehicle 110 at a location 160 and according to a set of conditions of the first vehicle 110 and a set of conditions of the location 160. It is further assumed that the manoeuvre M1, M2 is recorded in a database 170.

Recording the manoeuvre M1, M2 in the database 170 triggers a request for the manoeuvre M1, M2 to be verified. A driver of a second vehicle therefore downloads the manoeuvre M1, M2 to the second vehicle. In some examples it is checked that the second vehicle has all the necessary sensors, ADAS capability, etc. needed to perform the manoeuvre M1, M2. As noted above, the manoeuvre M1, M2 might be tested for more than one second vehicle and thus be downloaded to more than one second vehicle. The next actions are then repeated for each such second vehicle.

The second vehicle is taken to the location 160, for example by being driven there by the driver. Alternatively, a replica of the location 160 might be built elsewhere, such as in a studio facility or laboratory.

The driver uses the second vehicle to test the manoeuvre M1, M2 by performing the manoeuvre M1, M2 at the location 160.

An assessment score is assigned to the manoeuvre M1, M2 upon the manoeuvre M1, M2 having been performed by the second vehicle at the location 160.

According to the invention, a report is issued in response to the manoeuvre M1, M2 having been tested. The report might be composed by the driver or be registered direct by the second vehicle whilst testing the manoeuvre M1, M2. This report is then uploaded to the database 170 for review. Trusted stakeholders might then review the report and submit possible comments thereto to the database 170. The driver of the second vehicle might then download the comments and either update the report, with or without re-testing the manoeuvre M1, M2, before the report as updated is uploaded to the database 170 for a new review. This update procedure might be iterated until there are no more comments to the report and the assessment score is above the threshold value. The manoeuvre M1, M2 is then considered verified and is thus ready to be used by at least on third vehicle, possibly with restrictions to some vehicle types, sensor equipment, and/or with comments and/or warnings to be displayed in a graphical user interface of the third vehicle. The manoeuvre M1, M2 is then enabled to be downloaded from the database 170 to the third vehicle.

Details of the above mentioned second embodiment for the manoeuvre M1, M2 to be tested will be disclosed next.

It is assumed that a manoeuvre M1, M2 is performed by a first vehicle 110 at a location 160 and according to a set of conditions of the first vehicle 110 and a set of conditions of the location 160. It is further assumed that the manoeuvre M1, M2 is recorded in a database 170.

Recording the manoeuvre M1, M2 in the database 170 triggers a request for the manoeuvre M1, M2 to be verified. The manoeuvre M1, M2 is therefore downloaded to a simulation environment. The simulation environment is built up in accordance with the location 160, the set of conditions of the first vehicle 110 and the set of conditions of the location 160. The simulation environment might be built up by means of a 3D model. Also sensors or other type of equipment of the first vehicle might be modeled by sensor models, and the like. The manoeuvre M1, M2 either is automatically tested in the simulation environment by being computer simulated in the simulation environment or is tested in the simulation environment by a driver performing the manoeuvre M1, M2 in a driving simulator. As noted above, the manoeuvre M1, M2 might be tested for more than one second vehicle and thus be downloaded to more than one simulation environment. The next actions are then repeated for each such simulation environment. Further, simulation models and simulation rules, e.g., required time and space resolution, might be updated and/or downloaded per need basis.

An assessment score is assigned to the manoeuvre M1, M2 upon the manoeuvre M1, M2 having been simulated.

According to the invention, a report is issued in response to the manoeuvre M1, M2 having been tested. The report might be composed by the driver of the driving simulator or be registered direct by the simulation environment. This report is then uploaded to the database 170 for review. Trusted stakeholders might then review the report and submit possible comments thereto to the database 170.

The driver of the driving simulator or the simulation environment itself might then download the comments and either update the report, with or without re-testing the manoeuvre M1, M2, before the report as updated is uploaded to the database 170 for a new review. This update procedure might be iterated until there are no more comments to the report and the assessment score is above the threshold value. The manoeuvre M1, M2 is then considered verified and is thus ready to be used by at least on third vehicle, possibly with restrictions to some vehicle types, sensor equipment, and/or with comments and/or warnings to be displayed in a graphical user interface of the third vehicle. The manoeuvre M1, M2 is then enabled to be downloaded from the database 170 to the third vehicle.

The herein disclosed embodiments are applicable to any vehicle and in particular to heavy-duty vehicles, such as trucks, buses and construction equipment, etc. In some embodiments, each vehicle 110 is a truck.

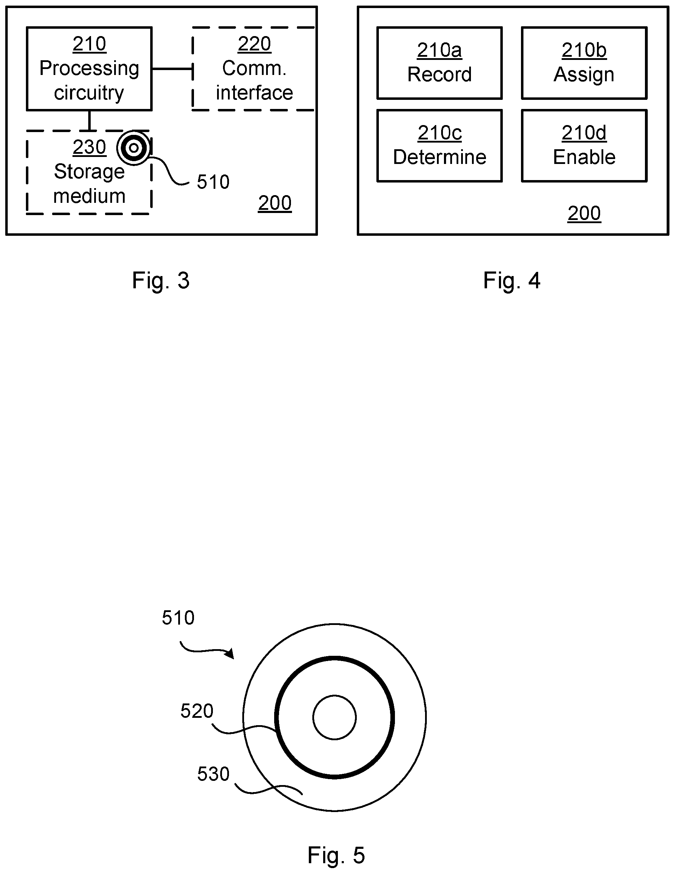

**Fig. 3** schematically illustrates, in terms of a number of functional units, the components of a server 200 according to an embodiment. Processing circuitry 210 is provided using any combination of one or more of a suitable central processing unit (CPU), multiprocessor, microcontroller, digital signal processor (DSP), etc., capable of executing software instructions stored in a computer program product 510 (as in Fig. 5), e.g. in the form of a storage medium 230. The processing circuitry 210 may further be provided as at least one application specific integrated circuit (ASIC), or field programmable gate array (FPGA).

Particularly, the processing circuitry 210 is configured to cause the server 200 to perform a set of operations, or steps, as disclosed above. For example, the storage medium 230 may store the set of operations, and the processing circuitry 210 may be configured to retrieve the set of operations from the storage medium 230 to cause the server 200 to perform the set of operations. The set of operations may be provided as a set of executable instructions.

Thus the processing circuitry 210 is thereby arranged to execute methods as herein disclosed. The storage medium 230 may also comprise persistent storage, which, for example, can be any single one or combination of magnetic memory, optical memory, solid state memory or even remotely mounted memory. The server 200 may further comprise a communications interface 220 at least configured for communications with the ADAS module 120. As such the communications interface 220 may comprise one or more transmitters and receivers, comprising analogue and digital components. The processing circuitry 210 controls the general operation of the server 200 e.g. by sending data and control signals to the communications interface 220 and the storage medium 230, by receiving data and reports from the communications interface 220, and by retrieving data and instructions from the storage medium 230. Other components, as well as the related functionality, of the server 200 are omitted in order not to obscure the concepts presented herein.

**Fig. 4** schematically illustrates, in terms of a number of functional modules, the components of a server 200 according to an embodiment. The server 200 of Fig. 4 comprises a number of functional modules; a record module 210a configured to perform step S102, an assign module 210b configured to perform step S104, a determine module 210c configured to perform step S106, and an enable download module 210d configured to perform step S108. In general terms, each functional module 210a-210d may in one embodiment be implemented only in hardware and in another embodiment with the help of software, i.e., the latter embodiment having computer program instructions stored on the storage medium 230 which when run on the processing circuitry makes the server 200 perform the corresponding steps mentioned above in conjunction with Fig 4. It should also be mentioned that even though the modules correspond to parts of a computer program, they do not need to be separate modules therein, but the way in which they are implemented in software is dependent on the programming language used. Preferably, one or more or all functional modules 210a-210d may be implemented by the processing circuitry 210, possibly in cooperation with the communications interface 220 and/or the storage medium 230. The processing circuitry 210 may thus be configured to from the storage medium 230 fetch instructions as provided by a functional module 210a-210d and to execute these instructions, thereby performing any steps as disclosed herein.

The server 200 may be provided as a standalone device or as a part of at least one further device. Thus, a first portion of the instructions performed by the server 200 may be executed in a first device, and a second portion of the of the instructions performed by the server 200 may be executed in a second device; the herein disclosed embodiments are not limited to any particular number of devices on which the instructions performed by the server 200 may be executed. Hence, the methods according to the herein disclosed embodiments are suitable to be performed by a server 200 residing in a cloud computational environment. Therefore, although a single processing circuitry 210 is illustrated in Fig. 3 the processing circuitry 210 may be distributed among a plurality of devices, or nodes. The same applies to the functional modules 210a-210d of Fig. 4 and the computer program 520 of Fig. 5.

**Fig. 5** shows one example of a computer program product 510 comprising computer readable storage medium 530. On this computer readable storage medium 530, a computer program 520 can be stored, which computer program 520 can cause the processing circuitry 210 and thereto operatively coupled entities and devices, such as the communications interface 220 and the storage medium 230, to execute methods according to embodiments described herein. The computer program 520 and/or computer program product 510 may thus provide means for performing any steps as herein disclosed.

In the example of Fig. 5, the computer program product 510 is illustrated as an optical disc, such as a CD (compact disc) or a DVD (digital versatile disc) or a Blu-Ray disc. The computer program product 510 could also be embodied as a memory, such as a random access memory (RAM), a read-only memory (ROM), an erasable programmable read-only memory (EPROM), or an electrically erasable programmable read-only memory (EEPROM) and more particularly as a non-volatile storage medium of a device in an external memory such as a USB (Universal Serial Bus) memory or a Flash memory, such as a compact Flash memory. Thus, while the computer program 520 is here schematically shown as a track on the depicted optical disk, the computer program 520 can be stored in any way which is suitable for the computer program product 510.

## Claims

1. A method for enabling download of verified vehicle manoeuvres (M1, M2), the method comprising:
recording (S102), in a database (170), a manoeuvre (M1, M2) as having been performed by a first vehicle (110) at a location (160) and according to a set of conditions of the first vehicle (110) and a set of conditions of the location (160);
assigning (S104) an assessment score to the manoeuvre (M1, M2) upon the manoeuvre (M1, M2) having been tested for at least one second vehicle, wherein the manoeuvre (M1, M2) is tested under test conditions given by the location (160), the set of conditions of the first vehicle (110) and the set of conditions of the location (160), wherein aspects relating to safety concepts which could occur whilst the manoeuvre (M1, M2) is performed by at least one third vehicle are taken into consideration when testing the manoeuvre (M1, M2) for the at least one second vehicle such that such effects do not impact the safety of the manoeuvre (M1, M2) as performed by the at least third vehicle, wherein the assessment score is assigned upon review of a report issued in response to the manoeuvre (M1, M2) having been tested for the at least one second vehicle, wherein the assessment score is based on an outcome of the review, and wherein the manoeuvre (M1, M2) is edited when tested for the at least one second vehicle;
determining (S106) the manoeuvre (M1, M2) to be verified only when the assessment score is above a threshold value; and
enabling (S108) download of the manoeuvre (M1, M2) from the database (170) to the at least one third vehicle only in case the manoeuvre (M1, M2) is verified

2. The method according to claim 1, wherein the manoeuvre (M1, M2) is tested in a simulation environment built up in accordance with the location (160), the set of conditions of the first vehicle (110) and the set of conditions of the location (160).

3. The method according to claim 2, wherein the manoeuvre (M1, M2) is automatically tested in the simulation environment by being computer simulated in the simulation environment.

4. The method according to claim 1, wherein the manoeuvre (M1, M2) is tested for a plurality of second vehicles.

5. The method according to claim 1, wherein the manoeuvre (M1, M2) is tested by being performed by the at least one second vehicle at the same location (160) as the manoeuvre (M1, M2) was performed by the first vehicle (110).

6. The method according to claim 1, wherein the manoeuvre (M1, M2) as recorded in the database (170) is accompanied by an indication of manoeuvre support at the location (160).

7. The method according to claim 1, wherein the manoeuvre (M1, M2) is iteratively tested for the at least one second vehicle and one individual assessment score is assigned per iteration, until the assessment score is above the threshold value.

8. The method according to claim 1, wherein the manoeuvre (M1, M2) is associated with restrictions to certain vehicle types and/or sensor equipment and is only enabled to be downloaded to the at least one third vehicle if being one of said certain vehicle types and/or having said sensor equipment.

9. The method according to claim 1, wherein the manoeuvre (M1, M2) is edited to fit another vehicle type and/or sensor equipment than that of the first vehicle (110).

10. The method according to claim 1, wherein at least two manoeuvres (M1, M2) are recorded for the same location (160), wherein each of the at least two manoeuvres (M1, M2) is assigned its own assessment score upon having been tested for the at least one second vehicle, and wherein an indication of recommendation is provided for that manoeuvre (M1, M2) having the highest assessment score for the location (160).

11. The method according to claim 1, wherein the manoeuvre (M1, M2) is represented by a track consisting of point positions associated with actions taken by the first vehicle (110) when located at the point positions.

12. The method according to claim 1, wherein the manoeuvre (M1, M2) is an Advanced Driver Assistant, ADAS, manoeuvre.

13. The method according to claim 1, wherein the first vehicle (110) is a truck.

14. A server (200) for enabling download of verified vehicle manoeuvres (M1, M2), the server (200) comprising processing circuitry (210), the processing circuitry being configured to cause the server (200) to:
record, in a database (170), a manoeuvre (M1, M2) as having been performed by a first vehicle (110) at a location (160) and according to a set of conditions of the first vehicle (110) and a set of conditions of the location (160);
assign an assessment score to the manoeuvre (M1, M2) upon the manoeuvre (M1, M2) having been tested for at least one second vehicle, wherein the manoeuvre (M1, M2) is tested under test conditions given by the location (160), the set of conditions of the first vehicle (110) and the set of conditions of the location (160), wherein aspects relating to safety concepts which could occur whilst the manoeuvre (M1, M2) is performed by at least one third vehicle are taken into consideration when testing the manoeuvre (M1, M2) for the at least one second vehicle such that such effects do not impact the safety of the manoeuvre (M1, M2) as performed by the at least third vehicle, wherein the assessment score is assigned upon review of a report issued in response to the manoeuvre (M1, M2) having been tested for the at least one second vehicle, wherein the assessment score is based on an outcome of the review, and wherein the manoeuvre (M1, M2) is edited when tested for the at least one second vehicle;
determine the manoeuvre (M1, M2) to be verified only when the assessment score is above a threshold value; and
enable download of the manoeuvre (M1, M2) from the database (170) to the at least one third vehicle only in case the manoeuvre (M1, M2) is verified.

15. The server (200) according to claim 16, further being configured to perform the method according to any of claims 2 to 13.

16. A computer program (520) for enabling download of verified vehicle manoeuvres (M1, M2), the computer program comprising computer code which, when run on processing circuitry (210) of a server (200), causes the server (200) to:
record (S102), in a database (170), a manoeuvre (M1, M2) as having been performed by a first vehicle (110) at a location (160) and according to a set of conditions of the first vehicle (110) and a set of conditions of the location (160);
assign (S104) an assessment score to the manoeuvre (M1, M2) upon the manoeuvre (M1, M2) having been tested for at least one second vehicle, wherein the manoeuvre (M1, M2) is tested under test conditions given by the location (160), the set of conditions of the first vehicle (110) and the set of conditions of the location (160), wherein aspects relating to safety concepts which could occur whilst the manoeuvre (M1, M2) is performed by at least one third vehicle are taken into consideration when testing the manoeuvre (M1, M2) for the at least one second vehicle such that such effects do not impact the safety of the manoeuvre (M1, M2) as performed by the at least third vehicle, wherein the assessment score is assigned upon review of a report issued in response to the manoeuvre (M1, M2) having been tested for the at least one second vehicle, wherein the assessment score is based on an outcome of the review, and wherein the manoeuvre (M1, M2) is edited when tested for the at least one second vehicle;
determine (S106) the manoeuvre (M1, M2) to be verified only when the assessment score is above a threshold value; and
enable (S108) download of the manoeuvre (M1, M2) from the database (170) to the at least one third vehicle only in case the manoeuvre (M1, M2) is verified.

17. A computer program product (510) comprising a computer program (520) according to claim 16, and a computer readable storage medium (530) on which the computer program is stored.

## Patentansprüche

1. Verfahren zum Ermöglichen des Herunterladens von verifizierten Fahrzeugmanövern (M1, M2), das Verfahren umfassend:
Aufzeichnen (S102) eines Manövers (M1, M2) in einer Datenbank (170), das von einem ersten Fahrzeug (110) an einem Ort (160) und gemäß einem Satz von Bedingungen des ersten Fahrzeugs (110) und einem Satz von Bedingungen des Ortes (160) durchgeführt wurde;
Zuordnen (S104) einer Bewertungsnote zu dem Manöver (M1, M2), nachdem das Manöver (M1, M2) für mindestens ein zweites Fahrzeug getestet wurde, wobei das Manöver (M1, M2) unter Testbedingungen getestet wird, die durch den Ort (160), den Satz von Bedingungen des ersten Fahrzeugs (110) und den Satz von Bedingungen des Ortes (160) gegeben sind, wobei Aspekte, die sich auf Sicherheitskonzepte beziehen, die auftreten könnten, während das Manöver (M1, M2) von mindestens einem dritten Fahrzeug durchgeführt wird, beim Testen des Manövers (M1, M2) für das mindestens eine zweite Fahrzeug berücksichtigt werden, so dass solche Effekte die Sicherheit des Manövers (M1, M2), wie es von dem mindestens dritten Fahrzeug durchgeführt wird, nicht beeinflussen,
wobei die Bewertungsnote bei der Überprüfung eines Berichts zugewiesen wird, der als Reaktion darauf ausgegeben wird, dass das Manöver (M1, M2) für das mindestens eine zweite Fahrzeug getestet wurde, wobei die Bewertungsnote auf einem Ergebnis der Überprüfung basiert, und wobei das Manöver (M1, M2) bearbeitet wird, wenn es für das mindestens eine zweite Fahrzeug getestet wird;
Bestimmen (S106) des zu prüfenden Manövers (M1, M2) nur, wenn die Bewertungsnote über einem Schwellenwert liegt; und
Ermöglichen (S108) des Herunterladens des Manövers (M1, M2) aus der Datenbank (170) auf das mindestens eine dritte Fahrzeug nur dann, wenn das Manöver (M1, M2) verifiziert ist.

2. Verfahren nach Anspruch 1, wobei das Manöver (M1, M2) in einer Simulationsumgebung getestet wird, die in Übereinstimmung mit dem Ort (160), dem Satz von Bedingungen des ersten Fahrzeugs (110) und dem Satz von Bedingungen des Ortes (160) aufgebaut ist.

3. Verfahren nach Anspruch 2, wobei das Manöver (M1, M2) automatisch in der Simulationsumgebung getestet wird, indem es in der Simulationsumgebung computersimuliert wird.

4. Verfahren nach Anspruch 1, wobei das Manöver (M1, M2) für mehrere zweite Fahrzeugen getestet wird.

5. Verfahren nach Anspruch 1, wobei das Manöver (M1, M2) getestet wird, indem es von dem mindestens einen zweiten Fahrzeug an demselben Ort (160) durchgeführt wird, an dem das Manöver (M1, M2) von dem ersten Fahrzeug (110) durchgeführt wurde.

6. Verfahren nach Anspruch 1, wobei das Manöver (M1, M2), wie es in der Datenbank (170) aufgezeichnet ist, von einer Anzeige der Manöverunterstützung am Ort (160) begleitet wird.

7. Verfahren nach Anspruch 1, wobei das Manöver (M1, M2) für das mindestens eine zweite Fahrzeug wiederholend getestet wird und pro Wiederholung eine individuelle Bewertungsnote vergeben wird, bis die Bewertungsnote über dem Schwellenwert liegt.

8. Verfahren nach Anspruch 1, wobei das Manöver (M1, M2) mit Einschränkungen bestimmten Fahrzeugtypen und/oder Sensorausrüstungen zugeordnet ist und nur dann auf das mindestens eine dritte Fahrzeug heruntergeladen werden kann, wenn es zu den bestimmten Fahrzeugtypen gehört und/oder über die Sensorausrüstung verfügt.

9. Verfahren nach Anspruch 1, wobei das Manöver (M1, M2) so bearbeitet wird, dass es zu einem anderen Fahrzeugtyp und/oder einer anderen Sensorausrüstung als der des ersten Fahrzeugs (110) passt.

10. Verfahren nach Anspruch 1, wobei mindestens zwei Manöver (M1, M2) für denselben Ort (160) aufgezeichnet werden, wobei jedem der mindestens zwei Manöver (M1, M2) eine eigene Bewertungsnote zugeordnet wird, nachdem es für das mindestens eine zweite Fahrzeug getestet wurde, und wobei eine Empfehlungsanzeige für das Manöver (M1, M2) mit der höchsten Bewertungsnote für den Ort (160) bereitgestellt wird.

11. Verfahren nach Anspruch 1, wobei das Manöver (M1, M2) durch eine Spur dargestellt wird, die aus Punktpositionen besteht, die Aktionen zugeordnet sind, die das erste Fahrzeug (110) durchführt, wenn es sich an den Punktpositionen befindet.

12. Verfahren nach Anspruch 1, wobei es sich bei dem Manöver (M1, M2) um ein Advanced Driver Assistant (ADAS)-Manöver handelt.

13. Verfahren nach Anspruch 1, wobei das erste Fahrzeug (110) ein Lastwagen ist.

14. Server (200) zum Ermöglichen des Herunterladens von verifizierten Fahrzeugmanövern (M1, M2), wobei der Server (200) eine Verarbeitungsschaltung (210) umfasst, wobei die Verarbeitungsschaltung konfiguriert ist, um den Server (200) zu veranlassen:
ein Manöver (M1, M2) in einer Datenbank (170) aufzuzeichnen, das von einem ersten Fahrzeug (110) an einem Ort (160) und gemäß einem Satz von Bedingungen des ersten Fahrzeugs (110) und einem Satz von Bedingungen des Ortes (160) durchgeführt wurde;
dem Manöver (M1, M2) eine Bewertungsnote zuzuordnen, nachdem das Manöver (M1, M2) für mindestens ein zweites Fahrzeug getestet wurde, wobei das Manöver (M1, M2) unter Testbedingungen getestet wird, die durch den Ort (160), den Satz von Bedingungen des ersten Fahrzeugs (110) und den Satz von Bedingungen des Ortes (160) gegeben sind, wobei Aspekte, die sich auf Sicherheitskonzepte beziehen, die auftreten könnten, während das Manöver (M1, M2) von mindestens einem dritten Fahrzeug durchgeführt wird, beim Testen des Manövers (M1, M2) für das mindestens eine zweite Fahrzeug berücksichtigt werden, so dass solche Effekte die Sicherheit des Manövers (M1, M2), wie es von dem mindestens dritten Fahrzeug durchgeführt wird, nicht beeinflussen, wobei die Bewertungsnote bei der Überprüfung eines Berichts zugewiesen wird, der als Reaktion darauf ausgegeben wird, dass das Manöver (M1, M2) für das mindestens eine zweite Fahrzeug getestet wurde, wobei die Bewertungsnote auf einem Ergebnis der Überprüfung basiert, und wobei das Manöver (M1, M2) bearbeitet wird, wenn es für das mindestens eine zweite Fahrzeug getestet wird;
das zu prüfende Manöver (M1, M2) nur dann zu bestimmen, wenn die Bewertungsnote über einem Schwellenwert liegt; und
Herunterladen des Manövers (M1, M2) aus der Datenbank (170) auf das mindestens eine dritte Fahrzeug nur dann zu ermöglichen, wenn das Manöver (M1, M2) verifiziert ist.

15. Server (200) nach Anspruch 16, der ferner konfiguriert ist, um das Verfahren nach einem der Ansprüche 2 bis 13 durchzuführen.

16. Computerprogramm (520) zum Ermöglichen des Herunterladens von verifizierten Fahrzeugmanövern (M1, M2), wobei das Computerprogramm einen Computercode umfasst, der, wenn er auf einer Verarbeitungsschaltung (210) eines Servers (200) ausgeführt wird, den Server (200) veranlasst:
ein Manöver (M1, M2) in einer Datenbank (170) aufzuzeichnen (S102), das von einem ersten Fahrzeug (110) an einem Ort (160) und gemäß einem Satz von Bedingungen des ersten Fahrzeugs (110) und einem Satz von Bedingungen des Ortes (160) durchgeführt wurde;
dem Manöver (M1, M2) eine Bewertungsnote zuzuordnen (S104), nachdem das Manöver (M1, M2) für mindestens ein zweites Fahrzeug getestet wurde, wobei das Manöver (M1, M2) unter Testbedingungen getestet wird, die durch den Ort (160), den Satz von Bedingungen des ersten Fahrzeugs (110) und den Satz von Bedingungen des Ortes (160) gegeben sind, wobei Aspekte, die sich auf Sicherheitskonzepte beziehen, die auftreten könnten, während das Manöver (M1, M2) von mindestens einem dritten Fahrzeug durchgeführt wird, beim Testen des Manövers (M1, M2) für das mindestens eine zweite Fahrzeug berücksichtigt werden, so dass solche Effekte die Sicherheit des Manövers (M1, M2), wie es von dem mindestens dritten Fahrzeug durchgeführt wird, nicht beeinflussen, wobei die Bewertungsnote bei der Überprüfung eines Berichts zugewiesen wird, der als Reaktion darauf ausgegeben wird, dass das Manöver (M1, M2) für das mindestens eine zweite Fahrzeug getestet wurde, wobei die Bewertungsnote auf einem Ergebnis der Überprüfung basiert, und wobei das Manöver (M1, M2) bearbeitet wird, wenn es für das mindestens eine zweite Fahrzeug getestet wird;
das zu prüfende Manöver (M1, M2) nur dann zu bestimmen (S106), wenn die Bewertungsnote über einem Schwellenwert liegt; und
Herunterladen des Manövers (M1, M2) aus der Datenbank (170) auf das mindestens eine dritte Fahrzeug nur dann zu ermöglichen (S108), wenn das Manöver (M1, M2) verifiziert ist.

17. Computerprogrammprodukt (510) umfassend ein Computerprogramm (520) nach Anspruch 16 und ein computerlesbares Speichermedium (530), auf dem das Computerprogramm gespeichert ist.

## Revendications

1. Procédé permettant de télécharger des manœuvres de véhicule vérifiées (M1, M2), le procédé comprenant :
l'enregistrement (S102), dans une base de données (170), d'une manœuvre (M1, M2) effectuée par un premier véhicule (110) à un emplacement (160) et selon un ensemble de conditions du premier véhicule (110) et un ensemble de conditions de l'emplacement (160) ;
l'attribution (S104) d'un score d'évaluation à la manœuvre (M1, M2) lorsque la manœuvre (M1, M2) a été testée pour au moins un deuxième véhicule, la manœuvre (M1, M2) étant testée dans des conditions de test données par l'emplacement (160), l'ensemble de conditions du premier véhicule (110) et l'ensemble de conditions de l'emplacement (160), des aspects relatifs à des concepts de sécurité qui peuvent se produire pendant que la manœuvre (M1, M2) est effectuée par au moins un troisième véhicule étant pris en considération lors du contrôle de la manœuvre (M1, M2) pour l'au moins un deuxième véhicule, de telle sorte que ces effets n'affectent pas la sécurité de la manœuvre (M1, M2) telle qu'effectuée par l'au moins un troisième véhicule,
le score d'évaluation étant attribué lors de l'examen d'un rapport établi en réponse à la manœuvre (M1, M2) ayant été testée pour l'au moins un deuxième véhicule, le score d'évaluation étant basé sur un résultat de l'examen, et la manœuvre (M1, M2) étant éditée lors de l'essai pour l'au moins un deuxième véhicule ;
la détermination (S106) de la manœuvre (M1, M2) à vérifier uniquement lorsque le score d'évaluation est supérieur à une valeur seuil ; et
la permission (S108) de télécharger la manœuvre (M1, M2) de la base de données (170) vers au moins un troisième véhicule uniquement si la manœuvre (M1, M2) est vérifiée.

2. Procédé selon la revendication 1, dans lequel la manœuvre (M1, M2) est testée dans un environnement de simulation construit en fonction de l'emplacement (160), de l'ensemble de conditions du premier véhicule (110) et de l'ensemble de conditions de l'emplacement (160).

3. Procédé selon la revendication 2, dans lequel la manœuvre (M1, M2) est testée automatiquement dans l'environnement de simulation en étant simulée par ordinateur dans l'environnement de simulation.

4. Procédé selon la revendication 1, dans lequel la manœuvre (M1, M2) est testée pour une pluralité de deuxièmes véhicules.

5. Procédé selon la revendication 1, dans lequel la manœuvre (M1, M2) est testée en étant exécutée par l'au moins un deuxième véhicule au même emplacement (160) où la manœuvre (M1, M2) a été exécutée par le premier véhicule (110).

6. Procédé selon la revendication 1, dans lequel la manœuvre (M1, M2) telle qu'enregistrée dans la base de données (170) est accompagnée d'une indication d'assistance à la manœuvre à l'emplacement (160).

7. Procédé selon la revendication 1, dans lequel la manœuvre (M1, M2) est testée de manière itérative pour l'au moins un deuxième véhicule et un score d'évaluation individuel est attribué par itération jusqu'à ce que le score d'évaluation soit supérieur à la valeur seuil.

8. Procédé selon la revendication 1, dans lequel la manœuvre (M1, M2) est associée à des restrictions à certains types de véhicules et/ou à certains équipements de détection et n'est autorisée à être téléchargée vers l'au moins un troisième véhicule s'il est l'un desdits certains types de véhicules et/ou possède ledit équipement de détection.

9. Procédé selon la revendication 1, dans lequel la manœuvre (M1, M2) est éditée pour s'adapter à un type de véhicule et/ou équipement de détection autre que celui du premier véhicule (110).

10. Procédé selon la revendication 1, dans lequel au moins deux manœuvres (M1, M2) sont enregistrées pour le même emplacement (160), chacune des au moins deux manœuvres (M1, M2) se voyant attribuer son propre score d'évaluation ayant été testé pour l'au moins un deuxième véhicule, et une indication de recommandation étant fournie pour la manœuvre (M1, M2) ayant le score d'évaluation le plus élevé pour l'emplacement (160).

11. Procédé selon la revendication 1, dans lequel la manœuvre (M1, M2) est représentée par une piste constituée de positions ponctuelles associées à des actions entreprises par le premier véhicule (110) lorsqu'il est situé aux positions ponctuelles.

12. Procédé selon la revendication 1, dans lequel la manœuvre (M1, M2) est une manœuvre Advanced Driver Assistant, ADAS (assistance avancée au conducteur).

13. Procédé selon la revendication 1, dans lequel le premier véhicule (110) est un camion.

14. Serveur (200) permettant de télécharger des manœuvres de véhicule vérifiées (M1, M2), le serveur (200) comprenant un circuit de traitement (210), le circuit de traitement étant configuré pour amener le serveur (200) à :
enregistrer, dans une base de données (170), une manœuvre (M1, M2) telle qu'effectuée par un premier véhicule (110) à un emplacement (160) et selon un ensemble de conditions du premier véhicule (110) et un ensemble de conditions de l'emplacement (160) ;
attribuer un score d'évaluation à la manœuvre (M1, M2) lorsque la manœuvre (M1, M2) a été testée pour au moins un deuxième véhicule, la manœuvre (M1, M2) étant testée dans des conditions de test données par l'emplacement (160), l'ensemble des conditions du premier véhicule (110) et l'ensemble des conditions de l'emplacement (160), des aspects relatifs aux concepts de sécurité qui pourraient survenir lors de la manœuvre (M1, M2) effectuée par au moins un troisième véhicule étant pris en considération lors de l'essai de la manœuvre (M1, M2) pour au moins un deuxième véhicule de manière à ce que ces effets n'affectent pas la sécurité de la manœuvre (M1, M2) effectuée par l'au moins un troisième véhicule, le score d'évaluation étant attribué après examen d'un rapport établi en réponse à l'essai de la manœuvre (M1, M2) effectuée pour au moins un deuxième véhicule, le score d'évaluation étant fondé sur un résultat de l'examen, et la manœuvre (M1, M2) étant éditée lorsqu'elle est testée pour l'au moins un deuxième véhicule ;
déterminer la manœuvre (M1, M2) à vérifier uniquement lorsque le score d'évaluation est supérieur à une valeur seuil ; et
permettre le téléchargement de la manœuvre (M1, M2) à partir de la base de données (170) vers au moins un troisième véhicule uniquement si la manœuvre (M1, M2) est vérifiée.

15. Serveur (200) selon la revendication 16, étant en outre configuré pour exécuter le procédé selon l'une quelconque des revendications 2 à 13.

16. Programme informatique (520) permettant de télécharger des manœuvres de véhicule vérifiées (M1, M2), le programme informatique comprenant un code informatique qui, lorsqu'il est exécuté sur un circuit de traitement (210) d'un serveur (200), amène le serveur (200) à :
enregistrer (S102), dans une base de données (170), une manœuvre (M1, M2) comme ayant été effectuée par un premier véhicule (110) à un emplacement (160) et selon un ensemble de conditions du premier véhicule (110) et un ensemble de conditions de l'emplacement (160) ;
attribuer (S104) un score d'évaluation à la manœuvre (M1, M2) lorsque la manœuvre (M1, M2) a été testée pour au moins un deuxième véhicule, la manœuvre (M1, M2) étant testée dans des conditions de test données par l'emplacement (160), l'ensemble de conditions du premier véhicule (110) et l'ensemble de conditions de l'emplacement (160), des aspects relatifs aux concepts de sécurité pouvant se produire pendant que la manœuvre (M1, M2) est effectuée par au moins un troisième véhicule étant pris en considération lors du contrôle de la manœuvre (M1, M2) pour au moins un deuxième véhicule de manière à ce que ces effets n'affectent pas la sécurité de la manœuvre (M1, M2) telle que réalisée par l'au moins un troisième véhicule, le score d'évaluation étant attribué lors de l'examen d'un rapport émis en réponse à la manœuvre (M1, M2) ayant été testée pour l'au moins un deuxième véhicule, le score d'évaluation étant basé sur un résultat de l'examen, et la manœuvre (M1, M2) étant éditée lors de l'essai pour au moins un véhicule ;
déterminer (S106) la manœuvre (M1, M2) à vérifier uniquement lorsque le score d'évaluation est supérieur à une valeur seuil ; et
permettre (S108) le téléchargement de la manœuvre (M1, M2) à partir de la base de données (170) vers au moins un troisième véhicule uniquement dans le cas où la manœuvre (M1, M2) est vérifiée.

17. Produit de programmation informatique (510) comprenant un programme informatique (520) selon la revendication 16, et un support de stockage lisible par ordinateur (530) sur lequel le programme informatique est stocké.
